# EUROPEAN PATENT APPLICATION

(11) **EP 2 278 132 A1**
(43) Date of publication of application: **26.01.2011**
(21) Application number: 10165987.8
(22) Date of filing: 15.06.2010
(51) Int. Cl.: F01N 3/035, F01N 3/20, F01N 13/02

(54) **Exhaust gas purification system**

(30) Priority: 30.06.2009 JP 2009155347
(71) Applicant: Kabushiki Kaisha Toyota Jidoshokki, Kariya-shi, Aichi 448-8671 (JP)
(72) Inventor: KATO, Yoshifumi, Kariya-shi Aichi 448-8671 (JP)
(74) Representative: TBK-Patent

(57) **Abstract**

An exhaust gas purification system includes a casing through which exhaust gas is allowed to flow, an oxidation catalyst provided in the casing, a particulate matter collector located downstream of the oxidation catalyst in the casing as viewed in the direction of exhaust gas flow and spaced apart from the oxidation catalyst to form a space therebetween, an SCR catalyst integrated with the particulate matter collector, and a urea water supply device for supplying urea water to the space between the oxidation catalyst and the particulate matter collector. The casing is for being mounted to an engine assembly.

## Description

### BACKGROUND OF THE INVENTION

The present invention relates to an exhaust gas purification system, and more particularly to an exhaust gas purification system using a urea SCR (selective catalytic reduction) catalyst for removing nitrogen oxides (NOx) contained in exhaust gas emitted from a diesel engine.

There has been developed a urea SCR system for purifying exhaust gas by removing nitrogen oxides (NOx) contained in the exhaust gas emitted from a diesel engine. In the system, a catalyst called a urea SCR catalyst is used to react NOx with ammonia (NH₃) produced by hydrolysis of urea water thereby to produce nitrogen (N₂) and water (H₂O).

The urea SCR system includes an oxidation catalyst for accelerating oxidation of nitrogen monoxide (NO) in exhaust gas to nitrogen dioxide (NO₂), a valve for injecting urea water into exhaust gas, an SCR catalyst for accelerating reduction of NOx using ammonia produced from urea water, and another oxidation catalyst for accelerating decomposition by oxidation of ammonia which has not been reacted with NOx. These components of the urea SCR system are arranged in this order in the direction from the engine toward the muffler.

In addition to the urea SCR system, a diesel particulate filter (DPF) for collecting particulate matter (PM) such as carbon contained in exhaust gas is provided in the exhaust passage between the engine and the muffler. An exhaust gas purification system including such urea SCR system and DPF has many components between the engine and the muffler and requires a large space for installation in the vehicle. Thus, various exhaust gas purification systems with reduced size have been proposed to facilitate the installation of the system in the vehicle.

An example of such exhaust gas purification system is disclosed in WO 2006/057305. This system is provided in the exhaust gas passage and includes a first post-treatment device having a DPF supporting an oxidation catalyst, a reductant supply device for injecting urea as a reductant, a second post-treatment device having a urea DeNOx catalyst, and an auxiliary device having an oxidation catalyst. These components are arranged along the direction of exhaust gas flow. The oxidation catalyst on the DPF of the first post-treatment device serves to burn off soot collected on the DPF and also to oxidize NO contained in exhaust gas to NO₂. The urea DeNOx catalyst of the second post-treatment device serves to react NOx contained in exhaust gas with ammonia obtained from urea thereby to decompose NOx into nitrogen (N₂) and oxygen (O₂), serving as an SCR catalyst. The oxidation catalyst on the auxiliary device serves to decompose ammonia by oxidation to produce N₂ and water.

However, the catalytic activity of the SCR catalyst as in the system disclosed in WO 2006/057305 is not sufficient at a low temperature during a cold start, which decreases exhaust gas purification performance of the system.

The present invention is directed to providing an exhaust gas purification system that allows purification of exhaust gas by removing NOx and collection of particulate matter with reduced size and also allows improved exhaust gas purification performance.

### SUMMARY OF THE INVENTION

In accordance with an aspect of the present invention, an exhaust gas purification system includes a casing through which exhaust gas is allowed to flow, an oxidation catalyst provided in the casing, a particulate matter collector located downstream of the oxidation catalyst in the casing as viewed in the direction of exhaust gas flow and spaced apart from the oxidation catalyst to form a space therebetween, an SCR catalyst integrated with the particulate matter collector, and a urea water supply device for supplying urea water to the space between the oxidation catalyst and the particulate matter collector. The casing is for being mounted to an engine assembly.

Other aspects and advantages of the invention will become apparent from the following description, taken in conjunction with the accompanying drawings, illustrating by way of example the principles of the invention.

### BRIEF DESCRIPTION OF THE DRAWINGS

Fig. 1 is a perspective view of an engine assembly equipped with an exhaust gas purification system according to an embodiment of the present invention;
Fig. 2 is a schematic view of the exhaust gas purification system and its associated components of the engine assembly of Fig. 1;
Fig. 3 is a schematic view of the exhaust gas purification system of Figs. 1 and 2; and
Fig. 4 is a graph showing temperature change of SCR catalyst, comparing between the system of the present embodiment and the conventional system.

### DETAILED DESCRIPTION OF THE PREFERRED EMBODIMENTS

The following will describe the embodiment of the exhaust gas purification system according to the present invention with reference to the accompanying drawings. In the embodiment, the exhaust gas purification system is intended to be installed in a vehicle with a diesel engine.

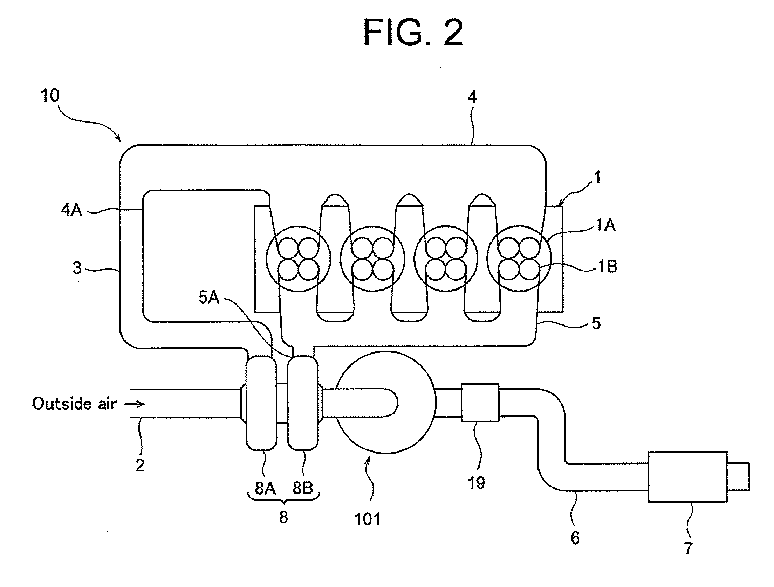

Referring to Fig. 2, an engine proper 1 has four cylinders 1A with intake ports (not shown) to which an intake manifold 4 is connected for distributing intake air to the respective cylinders 1A. The inlet 4A of the intake manifold 4 is connected to an intake pipe 3 that is further connected to a compressor housing 8A of a turbocharger 8. The compressor housing 8A is connected to an intake pipe 2 for introducing outside air.

An exhaust manifold 5 for collecting exhaust gas from the cylinders 1A into a single pipe is connected to the exhaust ports 1B of the engine proper 1. The outlet 5A of the exhaust manifold 5 is connected to a turbine housing 8B of the turbocharger 8, to which the exhaust gas purification system 101 is connected. The system 101 is of a generally cylindrical shape and connected to an exhaust pipe 6 that is further connected at the downstream end thereof to a muffler 7 as viewed in the direction of exhaust gas flow. The intake pipe 2, the turbocharger 8, the intake pipe 3 and the intake manifold 4 cooperate to form an intake system of the vehicle, while the exhaust manifold 5, the turbocharger 8, the exhaust gas purification system 101, the exhaust pipe 6 and the muffler 7 cooperate to form an exhaust system of the vehicle. The engine proper 1, the intake pipe 3, the intake manifold 4, the exhaust manifold 5 and the turbocharger 8 cooperate to form an engine assembly 10. That is, the engine assembly 10 includes an internal combustion engine having the engine proper 1, the intake pipe 3, the intake manifold 4, the exhaust manifold 5 and the turbocharger 8.

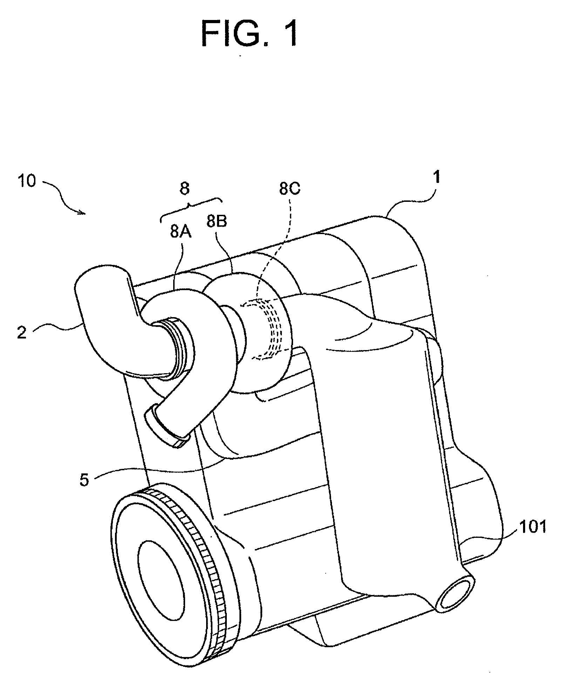

Referring to Fig. 1, the exhaust gas purification system 101 is mounted to the engine assembly 10, specifically to the turbocharger 8 that is mounted to the engine proper 1 through the exhaust manifold 5. The system 101 is located at a position that is adjacent to a lateral side of the engine proper 1.

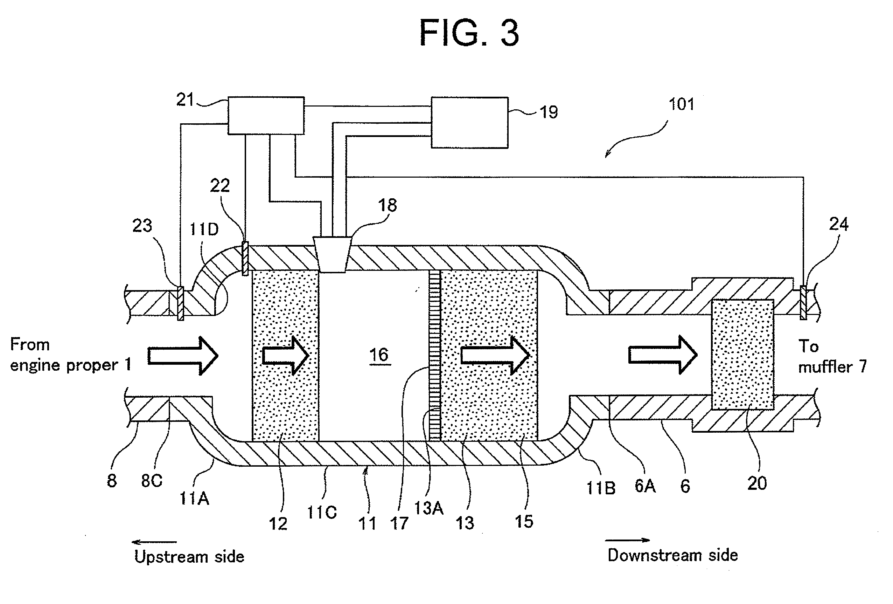

Referring to Fig. 3, the exhaust gas purification system 101 includes a generally cylindrical casing 11 made of a material with high thermal conductivity such as iron or stainless steel. The casing 11 has an upstream end 11A connected to the outlet 8C (exhaust gas outlet) of the turbine housing 8B of the turbocharger 8 and a downstream end 11 B connected to the end 6A of the exhaust pipe 6. The interior of the casing 11 communicates with the interior of the turbine housing 8B and the interior of the exhaust pipe 6.

The casing 11 accommodates therein a catalyst layer 12 and a diesel particulate filter (DPF) 13. The catalyst layer 12 is located upstream of the DPF 13 in the cylindrical portion 11C of the casing 11. The catalyst layer 12 and the DPF 13 are in the form of a layer extending perpendicular to the axis of the cylindrical portion 11C of the casing 11 over the entire radial dimension of the interior of the cylindrical portion 11C of the casing 11. The catalyst layer 12 and the DPF 13 are spaced apart from each other to form a space 16 therebetween. The catalyst layer 12 supports thereon a first oxidation catalyst serving to accelerate the oxidation of hydrocarbon (HC) and carbon monoxide (CO) contained in exhaust gas to water (H₂O) and carbon dioxide (CO₂) and also to accelerate the oxidation of nitrogen monoxide (NO) to nitrogen dioxide (NO₂). The first oxidation catalyst on the catalyst layer 12 preferably includes, for example, Pt, Pd, Rh, Ag, Fe, Cu, Ni or Au, or a combination of at least any two of these materials. The first oxidation catalyst on the catalyst layer 12 serves as the oxidation catalyst of the present invention.

The DPF 13 is made of porous material such as ceramic and serves to capture and collect particulate matter (PM) contained in exhaust gas. The DPF 13 serves as the particulate matter collector of the present invention. The PM collected needs to be burned off to prevent a decrease in the filter performance of the DPF 13 due to the accumulation of the collected PM. This burning off of the PM is accomplished by a heater such as a plasma electrode (not shown) provided in the DPF 13.

The DPF 13 supports thereon a urea selective catalytic reduction (SCR) catalyst 15. The SCR catalyst 15 is applied to the DPF 13, for example, by coating. That is, the SCR catalyst 15 is integrated with the DPF 13. The SCR catalyst 15 may be supported on an additional catalyst layer provided behind and integrally with the DPF 13.

The SCR catalyst 15 serves to accelerate the chemical reaction between any specific substances, specifically between nitrogen oxides (NOx) and ammonia (NH₃) thereby to reduce NOx to nitrogen (N₂) and water (H₂O). The SCR catalyst 15 should preferably be capable of resisting a temperature that is higher than the PM combustion temperature, for example, 650 degrees Celsius or higher. This temperature of the SCR catalyst 15 represents the upper limit of its operating temperature according to which the SCR catalyst 15 can offer at least 90% of its catalytic function. To meet such condition, the SCR catalyst 15 should preferably be made of, for example, transition-metal oxide composite including Zr oxide.

The exhaust gas purification system 101 further includes an injection valve 18 that serves as the urea water supply device of the present invention. The injection valve 18 is provided in the cylindrical portion 11C of the casing 11 at a position between the catalyst layer 12 and the DPF 13. A tank 19 holding urea water is connected to the injection valve 18, and urea water supplied from the tank 19 to the injection valve 18 is injected into the space 16 in the casing 11. As shown in Fig. 3, the injection valve 18 is located closer to the catalyst layer 12 than to the DPF 13 so as to supply urea water to a region closer to the catalyst layer 12 than to the DPF 13. More specifically, the injection valve 18 is located adjacent to the downstream end of the catalyst layer 12 so as to inject urea water into a region adjacent to the downstream end of the catalyst layer 12. The injection valve 18 is electrically connected to a dosing control unit (DCU) 21 and operated under the control of the DCU 21. The tank 19 is equipped with a motor pump (not shown) electrically connected to the DCU 21 and operated under the control of the DCU 21 so as to supply urea water from the tank 19 to the injection valve 18. The DCU 21 may be provided either separately from or integrally with a vehicle ECU. It is preferable to locate the injection valve 18 adjacent to the catalyst layer 12 upstream of the DPF 13 as described above.

In the casing 11, a mixer 17 is provided on the upstream end surface 13A of the DPF 13 to distribute the substances contained in the exhaust gas evenly over the end surface 13A. The mixer 17 has a structure, for example, as disclosed in Japanese Unexamined Patent Application Publication No. 6-509020T or No. 2006-9608. The mixer disclosed in the publication No. 6-509020T is made in the form of a lattice that divides the gas passage into plural cells so as to cause the gas flowing through each cell to flow spirally and also to flow toward the adjacent cell. This helps the substances in the exhaust gas to spread evenly in the whole passage. On the other hand, the mixer disclosed in the publication No. 2006-9608 has plural plates each extending perpendicularly to the direction of gas flow, which provides serpentine gas passage serving to distribute the substances in the gas evenly.

The exhaust pipe 6 on the downstream side of the exhaust gas purification system 101 accommodates therein a catalyst layer 20. The catalyst layer 20 supports thereon a second oxidation catalyst serving to oxidize ammonia to N₂, NO (or NO₂), and water. The second oxidation catalyst on the catalyst layer 20 should preferably include, for example, Pt, Pd, Ag, Fe, Cu, Ni or Au.

The casing 11 has an inlet 11D at the upstream end 11A, and an exhaust gas temperature sensor 22 is provided in the casing 11 downstream of the inlet 11D. The exhaust gas temperature sensor 22 is electrically connected to the DCU 21 and outputs temperature information of exhaust gas to the DCU 21. The exhaust gas temperature sensor 22 may be provided in the casing 11 at a position upstream of the inlet 11 D. The exhaust gas purification system 101 further includes a first NOx sensor 23 and a second NOx sensor 24 for detecting NOx concentration. The first NOx sensor 23 is provided in the upstream end 11A of the casing 11 upstream of the inlet 11 D, and the second NOx sensor 24 is provided in the exhaust pipe 6 downstream of the catalyst layer 20. The first and second NOx sensors 23 and 24 are electrically connected to the DCU 21 and output information about NOx concentration to the DCU 21.

As described above, the exhaust gas purification system 101 wherein the SCR catalyst 15 and the DPF 13 are integrated is mounted to the engine assembly 10, and the system 101 is located adjacently to the engine proper 1 (see Fig. 2). Specifically, the casing 11 of the system 101 is located adjacent to the engine proper 1.

The following will describe the operation of the exhaust gas purification system 101 and its associated components with reference to Figs. 1 through 4. Referring to Fig. 2, while the engine is operating, outside air is introduced as intake air through the intake pipe 2 into the compressor housing 8A of the turbocharger 8. The intake air is pumped by the compressor wheel (not shown) in the compressor housing 8A and then delivered at increased pressure through the intake pipe 3 and the intake manifold 4 into the cylinders 1A of the engine proper 1. The intake air mixed with diesel fuel in the cylinders 1A is spontaneously ignited and combusted.

Exhaust gas resulting from the combustion of fuel with intake air is emitted through the exhaust ports 1B into the exhaust manifold 5. The exhaust gas then flows into the turbine housing 8B of the turbocharger 8 and is discharged into the exhaust gas purification system 101 while increasing rotation speed of the turbine wheel (not shown) and the compressor (not shown either) wheel coupled to each other. Then the exhaust gas flows through the system 101, the exhaust pipe 6 and the muffler 7 and into the atmosphere out of the vehicle.

Referring to Fig. 3, all of the exhaust gas introduced into the exhaust gas purification system 101 firstly flows through the catalyst layer 12, so that HC and CO contained in the exhaust gas is oxidized to H₂O and CO₂ and part of NO is oxidized to NO₂ that tends to be reduced. After passing through the catalyst layer 12, the exhaust gas flows through the mixer 17 and into the DPF 13 having the SCR catalyst 15. PM in the exhaust gas is captured and collected by the DPF 13.

Concurrently, the motor pump of the tank 19 is operated and the injection valve 18 is opened under the control of the DCU 21 to inject urea water into the space 16 in the casing 11. In this case, heat of the exhaust gas flowing through the space 16 serves to accelerate the hydrolysis of urea water into ammonia and CO₂. The provision of the injection valve 18 adjacently to the catalyst layer 12 in the space 16 increases the time for the injected urea water to reach the DPF 13 or the SCR catalyst 15. This increases the reaction time for urea water to be hydrolyzed into ammonia, resulting in improved efficiency of hydrolysis of urea water. Thus, the injection valve 18 should preferably be located as far away from the DPF 13 as possible. In addition, since the urea water to be hydrolyzed to ammonia is injected into a region downstream of the catalyst layer 12, the produced ammonia is not oxidized by the first oxidation catalyst on the catalyst layer 12.

The ammonia produced by the hydrolysis flows with the exhaust gas through the mixer 17 while being dispersed by the mixer 17. The ammonia then flows with the exhaust gas into the DPF 13, where the ammonia reduces NOx including NO and NO₂ in the exhaust gas to N₂ with the aid of the SCR catalyst 15 on the DPF 13. Ammonia unreacted during NOx reduction is emitted out of the exhaust gas purification system 101 with the exhaust gas.

After passing through the DPF 13, the exhaust gas flows out of the exhaust gas purification system 101 and into the exhaust pipe 6 with PM removed therefrom, but containing ammonia having not been reacted with NOx and N₂. Then the exhaust gas flows through the catalyst layer 20 in the exhaust pipe 6 and the muffler 7 and emitted out of the vehicle. In this case, the unreacted ammonia remaining in the exhaust gas is oxidized by the catalyst layer 20, thereby preventing harmful ammonia from being emitted outside.

A catalyst becomes active at a predetermined temperature. The DCU 21 opens the injection valve 18 when the temperature detected by the exhaust gas temperature sensor 22 is at a predetermined temperature or higher at which the SCR catalyst 15 becomes active. The DCU 21 closes the injection valve 18 when the temperature at the exhaust gas temperature sensor 22 is lower than the predetermined temperature. NOx reduction is thus controlled by the DCU 21. Generally, the SCR catalyst 15 becomes active at a temperature of 150 degrees Celsius or higher. The DCU 21 controls the amount of urea water to be injected by adjusting the opening of the injection valve 18 based on the NOx concentration detected by the first NOx sensor 23. The adjustment of the opening of the injection valve 18 is performed also based on the NOx concentration detected by the second NOx sensor 24, that is, the concentration of NOx contained in the exhaust gas having passed through the SCR catalyst 15 and the catalyst layer 20. For example, when the NOx concentration at the second NOx sensor 24 exceeds a predetermined level, the DCU 21 increases the opening of the injection valve so as to increase the amount of urea water to be injected. The DCU 21 thus controls the amount of urea water and hence the amount of ammonia to be supplied to the SCR catalyst 15, thus controlling NOx reducing performance of the system 101.

As shown in Fig. 1, the exhaust gas purification system 101 is located adjacent to the engine proper 1, and the casing 11 of the system 101 receives heat generated by the engine proper 1 in operation. Since the casing 11 is made of a material with high thermal conductivity, the heat generated by the engine proper 1 is transferred through the wall of the casing 11 into the interior of the casing 11. Further, since high-temperature exhaust gas just after being emitted from the engine proper 1 and passed through the turbocharger 8 is introduced into the system 101, the interior of the casing 11 is heated efficiently. In this case, the casing 11 also receive heat generated by the engine proper 1, which prevents the heat in the casing 11 from being released to the outside, so that the temperature of the exhaust gas flowing in the casing 11 is maintained high.

Referring to Fig. 3, as described above, the first oxidation catalyst on the catalyst layer 12 and the SCR catalyst 15 on the DPF 13 in the casing 11 are heated by high-temperature exhaust gas, and the heat obtained from such high-temperature exhaust gas is prevented from being released. This helps to increase the temperature of the first oxidation catalyst on the catalyst layer 12 and the SCR catalyst 15 and also to maintain the temperature of the catalysts at a high level. In the exhaust gas purification system 101, therefore, the temperature of the first oxidation catalyst on the catalyst layer 12 and the SCR catalyst 15 is increased more quickly and it takes less time for the catalysts to become active during a cold start of the engine. Further, the temperature in the space 16 of the casing 11 is increased quickly, resulting in improved efficiency of the hydrolysis of ammonia.

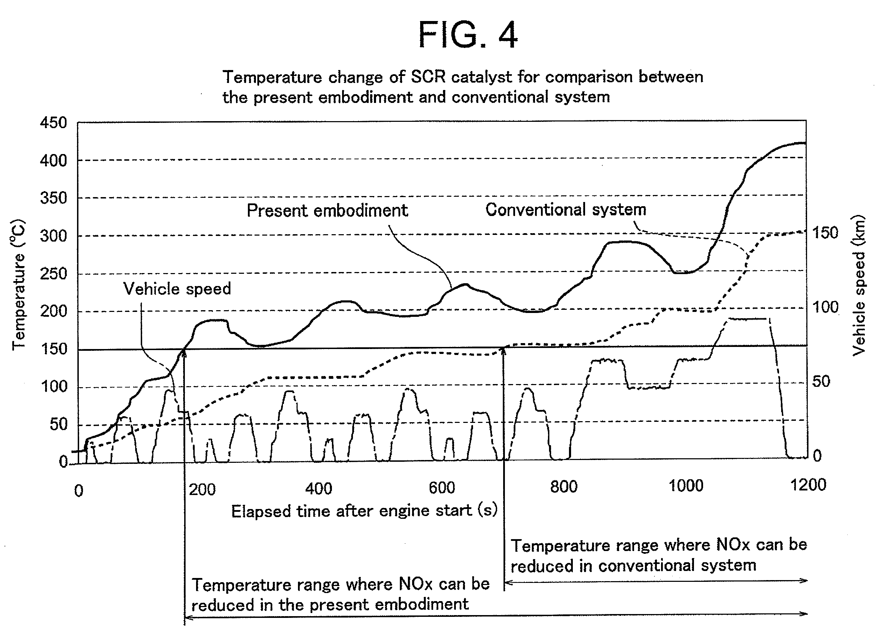

Fig. 4 is a graph showing a temperature change of SCR catalyst after a startup of the engine for comparison between the exhaust gas purification system 101 of the present embodiment and a conventional system having an oxidation catalyst, an SCR catalyst and a DPF provided separately and disposed in the exhaust pipe under the floor of the vehicle. In the graph, the solid line indicates temperature change of the SCR catalyst 15 of the exhaust gas purification system 101, and the dotted line indicates temperature change of the SCR catalyst of the conventional underfloor system. Vehicle running pattern shown in Fig. 4 is the one that is used in the engine exhaust gas test and also one of the simulation models used for evaluation of warm-up characteristics of the engine. It is noted that in the system 101 of the present embodiment the temperature detected by the exhaust gas temperature sensor 22 is regarded as the temperature of the SCR catalyst 15 and that in the conventional system the temperature of the exhaust gas flowing into the SCR catalyst is regarded as the temperature of the SCR catalyst. It is further noted that the temperature at which the SCR catalyst becomes active, that is, at which NOx can be reduced using the SCR catalyst is set at 150 degrees Celsius or more.

As is apparent from Fig. 4, in the exhaust gas purification system 101 of the present embodiment, the temperature of the SCR catalyst 15 reaches 150 degrees Celsius only in 200 seconds after the start of the engine, at which NOx reduction using the SCR catalyst 15 can be started. In the conventional underfloor system, on the other hand, the temperature of the SCR catalyst reaches 150 degrees Celsius in 750 seconds after the start of the engine, at which NOx reduction using the SCR catalyst 15 can be started. Thus, the time for the SCR catalyst to start reduction of NOx after a start of the engine in the case of the exhaust gas purification system 101 of the present embodiment is less than half as compared to the case of the conventional system, resulting in reduced NOx emission.

As described above, in the exhaust gas purification system 101 according to the present embodiment, the catalyst layer 12 and the DPF 13 are provided in the casing 11 through which exhaust gas flows. The DPF 13 integrated with the SCR catalyst 15 is provided downstream of the catalyst layer 12 and spaced apart from the catalyst layer 12. The system 101 further includes the injection valve 18 for supplying urea water to the space 16 between the catalyst layer 12 and the DPF 13. The casing 11 is mounted to the engine assembly 10.

Thus, the purification of exhaust gas containing NOx and PM is accomplished by the system 101 of a reduced size in which the DPF 13 integrated with the SCR catalyst 15, the catalyst layer 12 and the injection valve 18 are provided in the casing 11 as one unit. Further, the system 101 which requires less space for installation can be mounted to the engine assembly 10. In this case, high-temperature exhaust gas just after being emitted out of the engine proper 1 flows through the system 101 and, simultaneously, the system 101 receives heat generated by the engine proper 1. Thus, in the system 101, it takes less time for the temperature of the SCR catalyst 15 to reach the level at which the SCR catalyst 15 becomes active after a cold start of the engine, which improves NOx reduction performance.

The injection valve 18 supplies urea water to a region adjacent to the downstream end of the catalyst layer 12. This increases the time for the injected urea water to reach the SCR catalyst 15 integrated with the DPF 13, thereby increasing the reaction time for urea to be hydrolyzed into ammonia. As a result, the efficiency of the hydrolysis of urea is improved, and NOx reduction performance is improved, accordingly. In addition, since the SCR catalyst 15 is made to resist a temperature that is higher than the PM combustion temperature, the catalytic function of the SCR catalyst 15 is not affected by the combustion of PM for regeneration of DPF 13. As a result, NOx reduction performance of the system 101 is ensured for a long time.

Although the exhaust gas purification system 101 of the above embodiment is mounted to the turbocharger 8 of the engine assembly 10, the system 101 may be mounted to the outlet (exhaust gas outlet) of the exhaust manifold of an engine assembly having no turbocharger.

Although the system 101 (casing 11) of the embodiment is directly connected to the outlet 8C of the turbine housing 8B of the turbocharger 8, it may be mounted to the turbine housing 8B through an additional pipe.

Although the casing 11 of the system 101 has a cylindrical shape in the embodiment, it may be of a box shape, spherical shape or ellipsoidal shape.

In addition, the system 101 may dispense with the mixer 17 and/or the first NOx sensor 23.

An exhaust gas purification system includes a casing through which exhaust gas is allowed to flow, an oxidation catalyst provided in the casing, a particulate matter collector located downstream of the oxidation catalyst in the casing as viewed in the direction of exhaust gas flow and spaced apart from the oxidation catalyst to form a space therebetween, an SCR catalyst integrated with the particulate matter collector, and a urea water supply device for supplying urea water to the space between the oxidation catalyst and the particulate matter collector. The casing is for being mounted to an engine assembly.

## Claims

1. An exhaust gas purification system in which a particulate matter collector (13) is located downstream of an oxidation catalyst (12) as viewed in the direction of exhaust gas flow, the particulate matter collector (13) is spaced apart from the oxidation catalyst (12) to form a space (16) therebetween, an SCR catalyst (15) is integrated with the particulate matter collector (13), and a urea water supply device (18) is provided for supplying urea water to the space (16) between the oxidation catalyst (12) and the particulate matter collector (13),
**characterized in that** the oxidation catalyst (12), the particulate matter collector (13) and the SCR catalyst (15) are provided in a casing (11) through which exhaust gas is allowed to flow, and the casing (11) is for being mounted to an engine assembly (10) which discharges the exhaust gas.

2. The exhaust gas purification system according to claim 1, wherein the engine assembly (10) comprises an internal combustion engine comprising an engine proper (1) and an exhaust manifold (5), and the casing (11) is for being located adjacent to the engine proper (1).

3. The exhaust gas purification system according to claim 2, wherein the engine assembly (10) further comprises a turbocharger (8), and the casing (11) is for connecting to an exhaust gas outlet (8C) of the turbocharger (8).

4. The exhaust gas purification system according to claim 3, wherein the turbocharger (8) comprises a turbine housing (8B) having the exhaust gas outlet (8C), and the casing (11) is for being directly connected to the exhaust gas outlet (8C) of the turbine housing (8B).

5. The exhaust gas purification system according to claim 2, wherein the casing (11) is for connecting to an exhaust gas outlet (5A) of the exhaust manifold (5).

6. The exhaust gas purification system according to any one of claims 1 through 5, wherein the urea water supply device (18) supplies urea water to a region closer to the oxidation catalyst (12) than to the particulate matter collector (13).

7. The exhaust gas purification system according to any one of claims 1 through 6, wherein the SCR catalyst (15) is made to resist a temperature that is higher than the combustion temperature of particulate matter.
